(19) Europäisches Patentamt
European Patent Office
Office européen des brevets

(11) Veröffentlichungsnummer : **0 001 810**
**B2**

(12) **NEUE EUROPÄISCHE PATENTSCHRIFT**

(45) Veröffentlichungstag der neuen Patentschrift : **10.09.86**

(51) Int. Cl.4 : **C 08 F218/04** // (C08F218/04, 220:04)

(21) Anmeldenummer : **78101239.8**

(22) Anmeldetag : **27.10.78**

(54) **Verfahren zur Herstellung eines Vinylester-Copolymers.**

(30) Priorität : **02.11.77 DE 2748901**

(43) Veröffentlichungstag der Anmeldung : **16.05.79 Patentblatt 79/10**

(45) Bekanntmachung des Hinweises auf die Patenterteilung : **04.11.81 Patentblatt 81/44**

(45) Bekanntmachung des Hinweises auf die Entscheidung über den Einspruch : **10.09.86 Patentblatt 86/37**

(84) Benannte Vertragsstaaten :
**BE CH DE FR GB NL SE**

(56) Entgegenhaltungen :
**DE-A- 1 177 825**
**CHEMICAL ABSTRACTS, Vol. 62, 1965, 13272c, Columbus, Ohio, USA**
**Encyclopedia of Polymers Science and Technology, Vol. 15 (1971), Seite 584 bis 587**
**Die Akte enthält technische Angaben, die nach dem Eingang der Anmeldung eingereicht wurden und die nicht in dieser Patentschrift enthalten sind.**

(73) Patentinhaber : **HOECHST AKTIENGESELLSCHAFT**
**Postfach 80 03 20**
**D-6230 Frankfurt am Main 80 (DE)**

(72) Erfinder : **Eichhorn, Wilfried, Dr.**
**Ziegelheck 1**
**D-6240 Königstein/Taunus (DE)**
Erfinder : **Seibel, Peter, Dr.**
**Am Rosenwald 11**
**D-6233 Kelkheim (Taunus) (DE)**

**EP 0 001 810 B2**

**Beschreibung**

Die Herstellung von Copolymeren aus Vinylestern und Crotonsäure ist seit langem bekannt; sie erfolgt durch Polymerisieren der Monomeren in Masse oder in Lösung in Gegenwart eines radikalbildenden Initiators und üblicherweise in Anwesenheit einer Reglersubstanz zum Einstellen des Molekulargewichts und der Polymerisationsgeschwindigkeit. So ist in der deutschen Auslegeschrift 1 177 825 die Copolymerisation von Vinylacetat mit Crotonsäure beschrieben, die in einem Zweistufen-Verfahren erfolgt, bei dem zunächst ein Teil der Monomeren polymerisiert wird und dann die Hauptmenge des Monomerengemisches nachdosiert wird. Nach Ende der Polymerisation werden die flüchtigen Bestandteile mit Wasserdampt abdestilliert. Die bekannten Copolymeren eignen sich in Form von alkoholischen Lösungen als Filmbildner oder Bindemittel in Haarsprays und Haarfestigern.

Die bekannten Copolymeren haben sehr häufig den Nachteil, daß sie noch Reste von nicht umgesetzten Monomeren und Verunreinigungen enthalten; dies führt zu Geruchsbelästigungen und kann bei der Anwendung zu Hautreizungen Anlaß geben. Aufgabe der Erfindung ist demgegenüber die Herstellung von geruchsarmen Vinylester/Crotonsäure-Copolymeren, die die Nachteile der bekannten Copolymeren nicht aufweisen.

Die Erfindung betrifft ein Verfahren zur Herstellung eines Vinylester-Copolymers durch Polymerisieren mindestens eines Vinylesters und Crotonsäure, gegebenenfalls in Gegenwart eines Polyalkylenglykols, in Gegenwart eines radikalbildenden Initiators und einer Reglersubstanz und ist dadurch gekennzeichnet, daß das Gewichtsverhältnis der insgesamt eingesetzten Monomeren Vinylester/Crotonsäure 100 : 1 bis 100 : 20 beträgt, 70 bis 98 Gewichtsprozent der Gesamtmenge des Vinylesters mit der Gesamtmenge der Crotonsäure und gegebenenfalls der Gesamtmenge des Polyalkylenglykols copolymerisiert werden, die Polymerisation durch Zugabe der restlichen Menge des Vinylesters zu Ende geführt wird, und anschließend nicht umgesetzte Monomere und etwaige flüchtige Verunreinigungen durch Destillation mit Hilfe eines Alkanols mit 1 bis 3 Kohlenstoffatomen als Schleppmittel in einer Menge von 5 bis 50 Gew.-%, bezogen auf das Copolymer, aus dem Reaktionsgemisch entfernt werden.

Im Rahmen der Erfindung werden als Vinylester vor allem Vinylester von niederen aliphatischen Monocarbonsäuren verwendet, insbesondere Verbindungen der Formel

$$CH_2{=}CH{-}O{-}CO{-}R$$

in der R einen Alkylrest mit 1, 2 oder 3 Kohlenstoffatomen bedeutet, z. B. Vinylacetat, Vinylpropionat und Vinylbutyrat. Besonders bevorzugt ist Vinylacetat. Anstelle eines einzigen Vinylesters kann auch ein Gemisch mehrerer verschiedener Vinylester eingesetzt werden.

Als radikalbildende Initiatoren werden Peroxyverbindungen und aliphatische Azoverbindungen verwendet, z. B. Diacetylperoxid, Dibenzoylperoxid, Dilauroylperoxid, Diisopropylperkarbonat, tert.-Butylperoctoat, Di-t.butylperoxid und Cumolhydroperoxid sowie Azodiisobuttersäurenitril und Azodicarbonamid. Die Menge des Initiators beträgt 0,01 bis 5, vorzugsweise 0,1 bis 2 Gewichtsprozent, bezogen auf die Gesamtmenge der zu polymerisierenden Verbindungen.

Die Polymerisation wird üblicherweise in einem Temperaturbereich durchgeführt, der von 25 °C unterhalb der Siedetemperatur des Reaktionsgemisches bis zur Siedetemperatur des Reaktionsgemisches reicht. Empfehlenswert ist der Temperaturbereich von 50 bis 120 °C, vorzugsweise 70 bis 100 °C. Es ist zweckmäßig, die Polymerisation unter Inertgas durchzuführen. Als Inertgase eignen sich vor allem Stickstoff und Edelgase wir Argon.

Als Reglersubstanzen sind aliphatische Mercaptane, niedere aliphatische Aldehyde und niedere Alkanole geeignet, insbesondere aliphatische Mercaptane mit 4 bis 16 Kohlenstoffatomen, z. B. n-Butylmercaptan, t-Butylmercaptan und n-Dodecylmercaptan, ferner aliphatische Aldehyde mit 2 bis 4 Kohlenstoffatomen, z. B. Acetaldehyd, Propionaldehyd und Butyraldehyd, sowie Alkanole mit 1 bis 4 Kohlenstoffatomen, z. B. Methanol, Ethanol, Isopropanol und t-Butanol.

Eine bevorzugte Ausführung des erfindungsgemäßen Verfahrens ist die Durchführung der Polymerisation in zwei Stufen, wobei zunächst die Hauptmenge des Vinylesters mit der Gesamtmenge der Crotonsäure und gegebenenfalls der Gesamtmenge des Polyalkylenglykols polymerisiert wird und dann die Polymerisation nach Zugabe des Restes an Vinylester zu Ende geführt wird. Das Gewichtsverhältnis der insgesamt eingesetzten Monomeren Vinylester/Crotonsäure beträgt 100 : 1 bis 100 : 20, vorzugsweise 100 : 5 bis 100 : 15. In der ersten Polymerisationsstufe werden normalerweise 70 bis 98 Gewichtsprozent der Gesamtmenge des Vinylesters eingesetzt, vorzugsweise 80 bis 95 Gewichtsprozent; hierbei polymerisiert die eingesetzte Crotonsäure nahezu vollständig. Die Polymerisation der restlichen 2 bis 30, vorzugsweise 5 bis 20 Gewichtsprozent der Gesamtmenge des Vinylesters erfolgt dann in der zweiten Stufe, gegebenenfalls unter Zugabe von zusätzlichem Initiator.

Ein wesentliches Merkmal des erfindungsgemäßen Verfahrens ist die Maßnahme, daß nach Beendigung der Polymerisation die verbliebenen nicht umgesetzten Monomeren und etwaige flüchtige Verunreinigungen, die mit den Monomeren in das Reaktionsgemisch gelangt oder während der Reaktion entstanden sind, destillativ aus dem Reaktionsgemisch entfernt werden, damit das erhaltene Vinylester-Copolymer in möglichst reiner und geruchsarmer Form anfällt.

Hierfür ist die Verwendung eines Schleppmittels, in dem das Copolymer mindestens teilweise löslich oder quellbar ist, zweckmäßig. Als Schleppmittel eignen sich insbesondere niedere Alkanole mit 1 bis 3 Kohlenstoffatomen, wie z. B. Methanol, Ethanol und Isopropanol; das Schleppmittel kann bis zu 20 Gewichtsprozent Wasser enthalten. Das Schleppmittel wird in einer Menge von 5 bis 50, vorzugsweise 10 bis 30 Gewichtsprozent, bezogen auf das Copolymer, verwendet. Es ist vorteilhaft, das Schleppmittel mit dem Copolymer, das nach Beendigung der Polymerisation in geschmolzener Form vorliegt, zu vermischen, aber es kann dem Reaktionsgemisch auch vor oder während der Polymerisation zugesetzt werden, sofern es die Reaktion nicht stört. Das abdestillierte Schleppmittel kann ohne Aufarbeitung mehrmals eingesetzt werden.

Das erfindungsgemäße Verfahren führt, wenn ein Vinylester und Crotonsäure als einzige polymerisierbare Verbindungen verwendet werden, zu Copolymeren mit statistischer Verteilung der Monomereinheiten. Wird jedoch zusätzlich ein Polyalkylenglykol eingesetzt, so werden Pfropfcopolymere erhalten.

Als Polyalkylenglykole eignen sich vor allem Polyalkylenglykole mit einem durchschnittlichen Molekulargewicht (Zahlenmittel) von 106 bis 25 000, vorzugsweise von 1 000 bis 15 000, d. h. oligomere Verbindungen und höhermolekulare Polymere von aliphatischen Diolen oder entsprechenden cyclischen Ethern. Als Oligomere seien genannt Diethylenglykol, Triethylenglykol, Tetraethylenglykol sowie Dipropylenglykol und Tripropylenglykol, als Polymere insbesondere Polyethylenglykol und Polypropylenglykol. Copolymere verschiedener cyclischer Ether, insbesondere von Ethylenoxid und 1,2-Propylenoxid, sind gleichfalls anwendbar.

Die erfindungsgemäß erhaltenen Polymeren eignen sich als Rohstoffe für Klebstoffe und insbesondere für Haarlacke, Haarfestiger und Haarsprays. Auf dem Kosmetiksektor finden sie üblicherweise Anwendung in Form von verdünnten Lösungen in Gemischen aus Wasser und niederen Alkoholen, insbesondere Ethanol oder Isopropanol. Der Polymergehalt solcher Lösungen beträgt im allgemeinen 2 bis 5 Gewichtsprozent.

Die folgenden Beispiele erläutern die Erfindung und zeigen die Vorteile gegenüber dem Stand der Technik, der aus den Vergleichsbeispielen ersichtlich ist. Alle Prozentangaben beziehen sich auf das Gewicht; « ppm » bedeutet « Teile pro Million ». Der Monomergehalt der Polymerlösung wird jeweils durch Gaschromatographie bestimmt.

Beispiel 1

In einem mit Stickstoff gespülten 100-Liter-Rührreaktor, der mit Rückflußkühler, Mantelheizung und -kühlung versehen ist, werden 15 % eines Gemisches aus 56 kg Vinylacetat, 6,3 kg Crotonsäure, 1,3 kg Dibenzoylperoxid und 0,25 kg Acetaldehyd vorgelegt und auf Rückflußtemperatur (ca. 70 °C) erhitzt. Im Verlauf von 7 h werden die restlichen 85 % des vorgenannten Gemisches gleichmäßig zugeführt, wobei die Polymerisationswärme durch Mantelkühlung so abgeführt wird, daß ein schwacher Rückfluß erhalten bleibt und die Innentemperatur langsam auf 90 bis 95 °C ansteigt. Anschließend werden 7 kg Vinylacetat im Laufe von 1 h nachdosiert.

Nach 2-stündigem Nachheizen bei 95 °C wird das Reaktionsgemisch unter vermindertem Druck (ca. 70 mbar) 5 h lang destilliert. Die zurückbleibende Polymerschmelze wird in eine Wanne abgelassen und kühlt dort unter Verfestigung auf Raumtemperatur ab. Aus dem erhaltenen Polymer wird eine 60-prozentige Lösung in Ethanol hergestellt; sie enthält 65 ppm Crotonsäure und 1 210 ppm Vinylacetat. Diese Lösung wird durch Abdestillieren von Ethanol auf 70 % Feststoffgehalt konzentriert und dann mit Ethanol wieder auf einen Gehalt von 60 % verdünnt; sie enthält nun 60 ppm Crotonsäure und 340 ppm Vinylacetat und ist fast geruchsfrei.

Beispiel 2

Es wird wie in Beispiel 1 verfahren, jedoch setz sich das Ausgangsgemisch aus 49 kg Vinylacetat, 6,3 kg Crotonsäure, 1,1 kg Dibenzoylperoxid und 0,25 kg Acetaldehyd zusammen, und die Zuführung des 85 %-Anteils benötigt 6 h; in der zweiten Stufe werden 14 kg Vinylacetat, in dem 0,24 kg Dibenzoylperoxid gelöst sind, im Laufe von 2 h nachdosiert.

Die aus dem erhaltenen Polymer hergestellte 60-prozentige Lösung in Ethanol wird durch Abdestillieren von Ethanol auf 80 % Feststoffgehalt konzentriert und anschließend mit Ethanol wieder auf einen Gehalt von 60 % verdünnt. Die Lösung enthält dann 27 ppm Crotonsäure und 65 ppm Vinylacetat und ist geruchsfrei.

Vergleichbeispiel 1

In dem in Beispiel 1 beschriebenen Reaktor werden 15 % eines Gemisches aus 63 kg Vinylacetat, 6,3 kg Crotonsäure, 1,3 kg Dibenzoylperoxid und 0,25 kg Acetaldehyd vorgelegt und auf Rückflußtemperatur (ca. 70 °C) erhitzt. Im Verlauf von 8 h werden die restlichen 85 % des vorgenannten Gemisches gleichmäßig zugeführt, wobei der Temperaturanstieg entsprechend Beispiel 1 geregelt wird.

Nach 2-stündigem Nachheizen bei 95 °C wird das Reaktionsgemisch unter vermindertem Druck (ca. 70 mbar) 5 h lang destilliert. Die zurückbleibende Polymerschmelze wird in eine Wanne abgelassen und kühlt dort unter Verfestigung auf Raumtemperatur ab. Aus dem erhaltenen Polymer wird eine 60-prozentige Lösung in Ethanol hergestellt; die geruchsintensive Lösung enthält 186 ppm Crotonsäure und 1 260 ppm Vinylacetat.

Beispiel 3

In dem in Beispiel 1 beschriebenen Reaktor

werden 6 kg Polyethylenglykol, das ein durchschnittliches Molekulargewicht von 4 000 aufweist, und 15 % eines Gemisches aus 48 kg Vinylacetat, 4,8 kg Crotonsäure, 1,2 kg Dibenzoylperoxid und 0,25 kg Acetaldehyd vorgelegt und auf Rückflußtemperatur (ca. 70 °C) erhitzt. Im Verlauf von 6 h werden die restlichen 85 % des vorgenannten Gemisches gleichmäßig zugeführt, wobei der Temperaturanstieg entsprechend Beispiel 1 geregelt wird. Anschließend werden in der zweiten Stufe 12 kg Vinylacetat, in dem 0,3 kg Dibenzoylperoxid gelöst sind, im Laufe von 2 h nachdosiert.

Nach 2-stündigem Nachheizen bei 95 °C wird das Reaktionsgemisch unter vermindertem Druck (ca. 70 mbar) 5 h lang destilliert. Die zurückbleibende Polymerschmelze wird in eine Wanne abgelassen und kühlt dort unter Verfestigung auf Raumtemperatur ab. Aus dem erhaltenen Polymer wird eine 60-prozentige Lösung in einem Isopropanol/Wasser-Gemisch (87/13) hergestellt, die 35 ppm Crotonsäure und 1 350 ppm Vinylacetat enthält. Diese Lösung wird durch Abdestillieren des Lösemittels auf 80 % Feststoffgehalt konzentriert und dann mit demselben Lösemittel wieder auf einen Gehalt von 60 % verdünnt ; sie enthält dann 33 ppm Crotonsäure und 60 ppm Vinylacetat und ist nahezu geruchsfrei.

Beispiel 4

Es wird wie in Beispiel 3 verfahren, jedoch werden 6 kg Polypropylenglykol, das ein durchschnittliches Molekulargewicht von 2 000 aufweist, und 4 kg Isopropanol vorgelegt, und das Ausgangsgemisch besteht aus 48 kg Vinylacetat, 4,8 kg Crotonsäure und 1,2 kg t-Butylperoctoat ; die Zuführung des 85 %-Anteils benötigt 6 h. In der zweiten Stufe werden 12 kg Vinylacetat, in dem 0,3 kg t-Butylperoctoat gelöst sind, im Laufe von 2 h nachdosiert.

Die aus einer Probe des erhaltenen Polymers hergestellte 60-prozentige Lösung in Isopropanol/Wasser (87/13) enthält 32 ppm Crotonsäure und 970 ppm Vinylacetat, 600 g des festen Polymers werden dann zusammen mit 600 g Isopropanol aufgeschmolzen. Anschließend werden 252 g Isopropanol abdestilliert und 52 ml Wasser unter Rühren zugesetzt. Die so erhaltene 60-prozentige Lösung enthält 30 ppm Crotonsäure und 55 ppm Vinylacetat.

Vergleichsbeispiel 2

In dem in Beispiel 1 beschriebenen Reaktor werden 6 kg Polyethylenglykol, das ein durchschnittliches Molekulargewicht von 4 000 aufweist, und 15 % eines Gemisches aus 60 kg Vinylacetat, 4,8 kg Crotonsäure, 1,5 kg Dibenzoylperoxid und 0,25 kg Acetaldehyd vorgelegt und auf Rückflußtemperatur (ca. 70 °C) erhitzt. Im Verlauf von 8 h werden die restlichen 85 % des vorgenannten Gemisches gleichmäßig zugeführt, wobei der Temperaturanstieg entsprechend Beispiel 1 geregelt wird.

Nach 2-stündigem Nachheizen bei 95 °C wird das Reaktionsgemisch unter vermindertem Druck (ca. 70 mbar) 5 h lang destilliert. Die zurückbleibende Polymerschmelze wird in eine Wanne abgelassen und kühlt dort unter Verfestigung auf Raumtemperatur ab. Aus dem erhaltenen Polymer wird eine 60-prozentige Lösung in einem Isopropanol/Wasser-Gemisch (87/13) hergestellt ; sie enthält 197 ppm Crotonsäure und 1 320 ppm Vinylacetat.

Vergleichsbeispiel 3

Es wird wie in Vergleichsbeispiel 2 verfahren, jedoch wird statt Polyethylenglykol nun Polypropylenglykol mit einem durchschnittlichen Molekulargewicht von 2 000 verwendet, und als Ausgangsgemisch dient ein Gemisch aus 60 kg Vinylacetat, 4,8 kg Crotonsäure und 1,5 kg t-Butylperoctoat.

Die aus dem erhaltenen Polymer hergestellte 60-prozentige Lösung in Isopropanol/Wasser (87/13) enthält 210 ppm Crotonsäure und 1 130 ppm Vinylacetat.

**Patentansprüche**

1. Verfahren zur Herstellung eines Vinylester-Copolymers durch Polymerisieren mindestens eines Vinylesters und Crotonsäure, gegebenenfalls in Gegenwart eines Polyalkylenglykols, in Gegenwart eines radikalbildenden Initiators und einer Reglersubstanz, dadurch gekennzeichnet, daß das Gewichtsverhältnis der insgesamt eingesetzten Monomeren Vinylester/Crotonsäure 100 : 1 bis 100 : 20 beträgt, 70 bis 98 Gew.-% der Gesamtmenge des Vinylesters mit der Gesamtmenge der Crotonsäure und gegebenenfalls der Gesamtmenge des Polyalkylenglykols copolymerisiert werden, die Polymerisation durch Zugabe der restlichen Menge des Vinylesters zu Ende geführt wird, und anschließend nicht umgesetzte Monomere und etwaige flüchtige Verunreinigungen durch Destillation mit Hilfe eines Alkohols mit 1 bis 3 Kohlenstoffatomen als Schleppmittel in einer Menge von 5 bis 50 Gew.-%, bezogen auf das Copolymer, aus dem Reaktionsgemisch entfernt werden.

2. Verfahren nach Anspruch 1, dadurch gekennzeichnet, daß das Schleppmittel mit dem nach Beendigung der Polymerisation in geschmolzener Form vorliegenden Copolymer vermischt wird.

3. Verfahren nach Anspruch 1, dadurch gekennzeichnet, daß als Polyalkylenglykol Poly(ethylenglykol) und/oder Poly(propylenglykol) mit einem durchschnittlichen Molekulargewicht (Zahlenmittel) von 106 bis 25 000 verwendet werden.

**Claims**

1. Process for the manufacture of a vinyl ester copolymer by polymerizing at least one vinyl ester

and crotonic acid, optionally in the presence of a polyalkylene glycol, in the presence of a radical-forming initiator and a regulating substance, characterized by copolymerizing 70 to 98 percent by weight of the total amount of the vinyl ester with the total amount of the crotonic acid and optionally the total amount of the polyalkylene glycol, completing the polymerization by adding the residual amont of the vinyl ester, the ratio by weight of the total amounts of monomers vinyl ester/crotonic acid being from 100 : 1 to 100 : 20, and subsequently removing unreacted monomers and possible volatile impurities from the reaction mixture by distillation by means of an alkanol having from 1 to 3 carbon atoms as entrainer in an amount of from 5 to 50 percent by weight, referred to the copolymer.

2. Process according to claim 1 characterized by mixing the entrainer with the copolymer being present in molten state after termination of the polymerization.

3. Process according to claim 1 characterized by using as polyalkylene glycol poly(ethylene glycol) and/or poly(propylene glycol) having an average molecular weight (number average) of from 106 to 25,000.

**Revendications**

1. Procédé de préparation d'un copolymère d'un ester vinylique par polymérisation d'au moins un ester vinylique et d'acide crotonique, éventuellement en présence d'un polyalkylène-glycol, et en présence d'un amorceur radicalaire et d'une substance régulatrice, procédé caractérisé en ce qu'on utilise l'ensemble des monomères avec un rapport ester(s) vinylique(s)/acide crotonique compris entre 100 : 1 et 100 : 20, on copolymérise de 70 à 98 % en poids de la totalité de l'ester vinylique avec la totalité de l'acide crotonique et éventuellement la totalité du polyalkylène-glycol, on achève la polymérisation en ajoutant le reste de l'ester vinylique, puis on élimine du mélange réactionnel les monomères qui n'ont pas réagi et d'éventuelles impuretés volatiles, cela par distillation au moyen d'un alcanol contenant de 1 à 3 atomes de carbone comme agent d'entraînement, utilisé en une quantité de 5 à 50 % en poids par rapport au copolymère.

2. Procédé selon la revendication 1, caractérisé en ce qu'on mélange l'agent d'entraînement avec le copolymère qui, après la fin de la polymérisation, est à l'état fondu.

3. Procédé selon la revendication 1, caractérisé en ce qu'on utilise, comme polyalkylène-glycol, un poly-(éthylène-glycol) et/ou un poly-(propylène-glycol) ayant un poids moléculaire moyen en nombre de 106 à 25 000.